# EUROPEAN PATENT APPLICATION

(11) **EP 2 330 298 A1**
(43) Date of publication of application: **08.06.2011**
(21) Application number: 08877162.1
(22) Date of filing: 03.10.2008
(51) Int. Cl.: F03D 11/04

(54) **EVALUATION INDEX SETTING METHOD AND PROGRAM THEREOF**

(71) Applicant: Mitsubishi Heavy Industries, Ltd., Tokyo 108-8215 (JP)
(72) Inventor: NAKAYAMA, Shin, Nagasaki-shi Nagasaki 851-0392 (JP); TADA, Masuo, Nagasaki-shi Nagasaki 851-0392 (JP)
(74) Representative: Henkel, Feiler & Hänzel
(86) International application number: PCT/JP2008/068028
(87) International publication number: WO 2010/038305

(57) **Abstract**

An object is to set an appropriate evaluation index based more closely on reality by appropriately evaluating durability/strength necessary for operating a wind turbine. Provided is an evaluation-index setting method including a first step of obtaining time-series data of a load that acts on an evaluation target portion of a wind turbine, when operating under a predetermined operating condition, and of obtaining stress time-series data from this load time-series data and a second step of obtaining a fracture toughness value which is a value that is minimally necessary for the evaluation target portion to maintain predetermined strength for a case in which the evaluation target portion is subjected to stress based on the stress time-series data over a compensation operating period, and of determining, on the basis thereof, a required fracture toughness value that serves as an index.

## Description

### Technical Field

The present invention relates to an evaluation-index setting method for setting an evaluation index for appropriately evaluating the durability of a member employed for wind power, as well as to a program therefor.

### Background Art

When manufacturing a wind turbine, it is necessary to evaluate whether or not steel material to be employed in the wind turbine satisfies a predetermined evaluation standard in terms of strength and durability. The Charpy value has been employed as the evaluation standard. This evaluation standard is for an evaluation based on whether or not the Charpy value of a steel material to be employed in a wind turbine satisfies a defined evaluation index in a certain temperature environment.
Patent Citation 1: Japanese Unexamined Patent Application, Publication No. 2006-88184.

### Disclosure of Invention

However, because the above-described evaluation standard employing the Charpy value is not determined in consideration of the mechanical operating environment, temperature, etc. in which a wind turbine is actually used, excessive durability as compared with the durability that is actually necessary has consequently been required. Therefore, it is difficult to obtain steel material that satisfies such a Charpy value, and almost any material ends up being judged as being unsuitable; thus, there has been a concern about the possibility of causing delays or cost increases in manufacturing. Therefore, there has been a demand for establishing an appropriate evaluation definition based more closely on reality.

An object of the present invention is to provide an evaluation-index setting method and a program therefor that are capable of setting an appropriate evaluation index based more closely on reality, by appropriately evaluating durability/strength necessary in operating a wind turbine.

A first aspect of the present invention provides an valuation-index setting method including a first step of obtaining time-series data of a load that acts on an evaluation target portion of a wind turbine, when operating under a predetermined operating condition, and of obtaining stress time-series data from this load time-series data and a second step of obtaining a fracture toughness value, which is a value that is minimally necessary for preventing a brittle fracture from occurring in the evaluation target portion when the evaluation target portion is subjected to stress, based on the stress time-series data over a compensation operating period, and of determining, on the basis thereof, a required fracture toughness value that serves as an index.

According to the present invention, an operating condition of a wind turbine is taken into consideration; a minimum fracture toughness value necessary to endure through a compensation operating period under this operating condition is obtained; and a required fracture toughness value that serves as an index is determined on the basis of this fracture toughness value; therefore, it becomes possible to set an appropriate evaluation index which reflects the operating situation of the wind turbine.

In the above-described evaluation-index setting method, the second step may include a step of setting the size of an initial defect occurring in the evaluation target portion; a step of estimating the size of the initial defect after the compensation operating period has passed, when stress based on the stress time-series data acts on the evaluation target portion; and a step of obtaining a minimum fracture toughness value, which is a value that does not cause fracture even when a maximum stress in the stress time-series data acts on the defect after the compensation period has passed, and of determining the required fracture toughness value on the basis thereof.

The most severe surrounding environment for the operation of the wind turbine is assumed; a minimum fracture toughness value necessary to endure through the compensation operating period under this surrounding environment is obtained; and the required fracture toughness value that serves as the index is determined on the basis of this fracture toughness value; therefore, it becomes possible to set an appropriate evaluation index that is adequate from the viewpoint of durability/strength and non-excessive.

The above-described evaluation-index setting method may include a third step of converting the required fracture toughness value to a required Charpy value.

The above-described toughness fracture inspection presents an inconvenience that the inspection is not easily performed due to the complexity of the test. On the other hand, however, the evaluation inspection for the Charpy value can be relatively easily performed. Therefore, it becomes possible to easily perform the evaluation inspection by defining the required Charpy value corresponding to the required fracture toughness value as the index of the evaluation inspection.

In the above-described evaluation-index setting method, the third step may include a step of acquiring a Charpy-value-versus-temperature characteristic of a member to be employed in the evaluation target portion; a step of identifying, as a specific temperature, a temperature indicating a Charpy value of a predetermined fraction relative to a maximum Charpy value in the Charpy-value-versus-temperature characteristic; a step of generating a Charpy-value-versus-relative-temperature characteristic in which the temperature in the Charpy-value-versus-temperature characteristic is defined as relative temperature, which is the temperature minus the specific temperature; a step of acquiring a fracture-toughness-value-versus-temperature characteristic of the member; a step of identifying, as a specific temperature, a temperature indicating a fracture toughness value of the predetermined fraction relative to the maximum fracture toughness value in the fracture-toughness-value-versus-temperature characteristic; a step of generating a fracture-toughness-value-versus-relative-temperature characteristic in which the temperature in the fracture-toughness-value-versus-temperature characteristic is defined as relative temperature, which is the temperature minus the specific temperature; and a step of obtaining a relative temperature value corresponding to the required fracture toughness value from the fracture-toughness-value-versus-relative-temperature characteristic, and of acquiring a Charpy value corresponding to this relative temperature value from the Charpy-value-versus-relative-temperature characteristic.

In this way, by obtaining the Charpy-value-versus-relative-temperature characteristic and the fracture-toughness-value-versus-relative-temperature characteristic in which relative temperature is used as the temperature parameter, it becomes possible to represent characteristics of a plurality of members having variation as characteristics having substantially the same trend. Accordingly, it becomes possible to easily associate the fracture toughness value with the Charpy value.

A second aspect of the present invention provides an evaluation-index setting program for causing a computer to execute first processing of obtaining time-series data of a load that acts on an evaluation target portion of a wind turbine, when operating under a predetermined operating condition, and of obtaining stress time-series data from this load time-series data and second processing of obtaining a fracture toughness value, which is a value that is minimally necessary for the evaluation target portion to maintain predetermined strength when the evaluation target portion is subjected to stress based on the stress time-series data over a compensation operating period, and of determining, on the basis thereof, a required fracture toughness value that serves as an index.

According to the present invention, an advantage is afforded in that an appropriate evaluation definition based more closely on reality can be set by appropriately determining durability that is necessary in operating a wind turbine.

### Brief Description of Drawings

[Fig. 1] Fig. 1 is a diagram showing the schematic configuration of a typical wind turbine.
[Fig. 2] Fig. 2 is a flow chart showing the procedure of an evaluation-index setting method according to an embodiment of the present invention.
[Fig. 3] Fig. 3 is a flow chart showing the procedure of converting a fracture toughness value to a Charpy value.
[Fig. 4] Fig. 4 is a diagram showing an example of a Charpy-value-versus-temperature characteristic.
[Fig. 5] Fig. 5 is a diagram showing an example of a Charpy-value-versus-relative-temperature characteristic.
[Fig. 6] Fig. 6 is a diagram showing an example of a fracture-toughness-value-versus-temperature characteristic.
[Fig. 7] Fig. 7 is a diagram showing an example of a fracture-toughness-value-versus-relative-temperature characteristic.
[Fig. 8] Fig. 8 is a diagram showing an average characteristic of the Charpy-value-versus-relative-temperature characteristic shown in Fig. 5.

### Explanation of Reference:

1: wind turbine
11: blade
12: nacelle
13: hub
14: tower

### Best Mode for Carrying Out the Invention

An embodiment of an evaluation-index setting method and a program therefor according to the present invention will be described below, referring to the drawings.

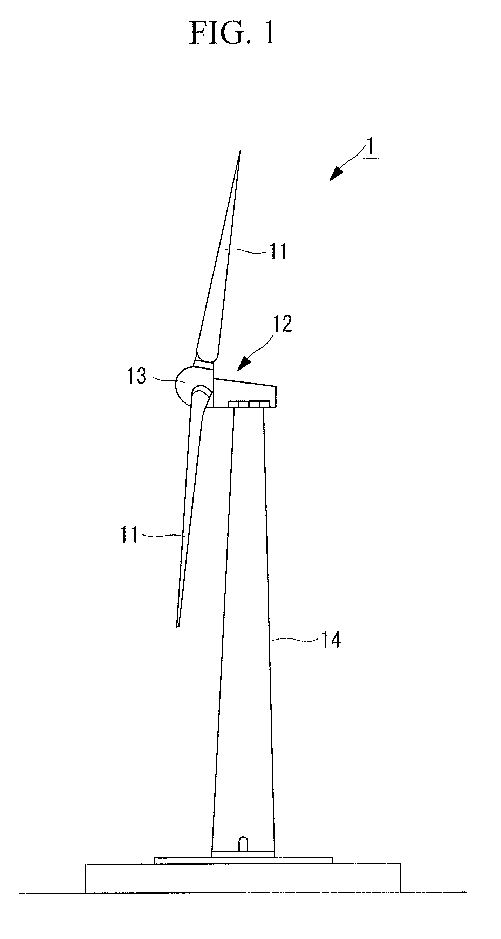

Fig. 1 is a block diagram showing the schematic configuration of a typical wind turbine.
As shown in Fig. 1, a wind turbine 1 includes three blades 11, a nacelle 12, a hub 13 for attaching the three blades 11 to the nacelle 12, and a tower 14 for supporting the nacelle 12. Although an example case that includes three blades 11 is described in this embodiment, the number of blades is not particularly limited thereto.

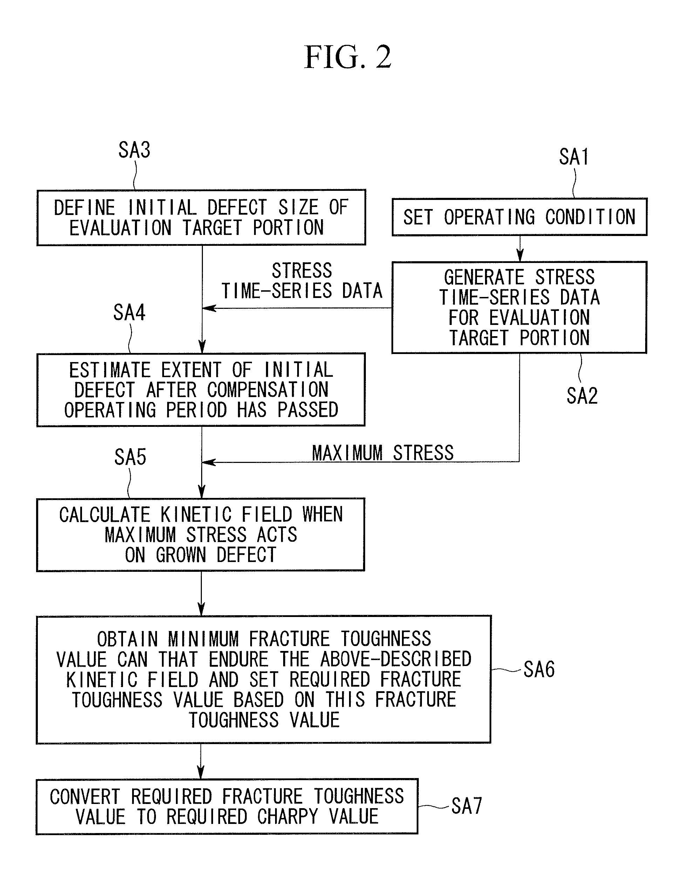

Next, an evaluation-index setting method for selecting an appropriate steel material from the viewpoint of durability/strength for the case of manufacturing the wind turbine 1 will be described with reference to Fig. 2. Fig. 2 is a flow chart showing the procedure of the evaluation-index setting method according to this embodiment. In the following, a case of setting an evaluation index for steel material to be employed in the nacelle 12 will be described as an example for the sake of convenience of description.

First, when operating under a predetermined operating condition, time-series data of a load that acts on an evaluation target portion (the nacelle in this embodiment) of the wind turbine 1 is obtained, and then, stress time-series data is obtained from this load time-series data.
Specifically, first, an operating condition under which the wind turbine 1 is operated is set (Step SA1 in Fig. 2). The operating condition differs in accordance with the region in which the wind turbine is installed, etc. and is set using a parameter including, for example, temperature, air density, etc. An operating condition where temperature is used as a parameter can be exemplified by performing a warm-up operation between -40 °C and -30 °C, shifting to a normal operation at -30 °C or above, and so forth.

Subsequently, load that acts on the evaluation target portion is estimated for the case in which the wind turbine 1 is operated under the operating condition set in Step SA1, thereby generating the load time-series data; and furthermore, the stress time-series data is generated from this load time-series data (Step SA2).
The stress time-series data may be estimated by employing a method known as the influence coefficient method in which stress per unit load that acts on the above-described evaluation target portion is obtained in advance, and the load time-series data is multiplied by this stress.

Next, a minimum required fracture toughness value that is necessary for the evaluation target portion to maintain a predetermined strength is obtained for the case in which the evaluation target portion is subjected to stress based on the stress time-series data, which is generated in Step SA2, over a compensation operating period (for example, 20 years).
Specifically, first, the size of an initial defect occurring in the evaluation target portion is defined (Step SA3). For example, steel material needs to be purchased when building the wind turbine 1, and this steel material may have small blemishes or cracks occurring therein. Normally, the allowable size of a defect for each steel material is clearly described in a specification of the steel material, and thus, this allowable size is employed as the initial defect size.

Next, the size of the initial defect after the compensation operating period has passed is estimated for the case in which the stress based on the stress time-series data generated in Step SA2 acts on the evaluation target portion (Step SA4). That is, the extent to which the defect defined as the initial defect grows is estimated by a fatigue-crack propagation analysis for the case in which the evaluation target portion is continuously subjected to the stress based on the stress time-series data.

Next, a maximum stress is selected from the stress time-series data estimated in Step SA2; a mechanical parameter such as a stress intensity factor is estimated from this maximum stress and the dimension of the grown defect (Step SA5); and a required fracture toughness value is set by adding a predetermined tolerance (margin) to this mechanical parameter (Step SA6).

In this way, the most severe mechanical environment is assumed from the viewpoint of durability; a minimum fracture toughness value necessary to prevent fracture under this environment is obtained; and the required fracture toughness value is determined based on this fracture toughness value; therefore, within a predictable range, it becomes possible to set an adequate, non-excessive, appropriate evaluation index that enables assured endurance through the compensation operation years.

Once the required fracture toughness value is determined in this way, subsequently, this required fracture toughness value is converted to a Charpy value (Step SA7).

When selecting steel material in terms of durability, if a value serving as an index thereof is limited to the fracture toughness value, it becomes necessary to perform fracture toughness tests for all steel materials included as selection candidates and to evaluate whether or not the required fracture toughness value is satisfied. The fracture toughness test has a shortcoming that it is not easily performed due to the complexity of the test. Therefore, it is not preferable to specify such a fracture toughness value as an index. On the other hand, an evaluation inspection for the Charpy value can be relatively easily performed. Therefore, it becomes possible to easily perform evaluation of steel material by obtaining a Charpy value corresponding to the required fracture toughness value and by defining the evaluation index as a Charpy value.

When converting a fracture toughness value to a Charpy value, a fracture toughness test and an evaluation test for obtaining the Charpy value are entirely different with respect to the sizes of test pieces and the environmental temperature during testing. For example, for a certain example steel material, a fracture toughness test is performed within a temperature range between -96 °C and 160 °C, whereas a Charpy test is performed within a temperature range between 0 °C and 40 °C. Since the temperature ranges are considerably different in this way, it is difficult to directly associate a fracture toughness value with a Charpy value. In addition, there is also a problem in that, even with the same steel material, there is large variation in the fracture toughness values and Charpy values due to various causes, including production period (lot), constituents, manufacturer, and surrounding conditions at the time of manufacture etc. Therefore, in this embodiment, such differences in temperature ranges and variation in solid bodies, etc. described above are overcome, and a method that allows easy conversion has been proposed.

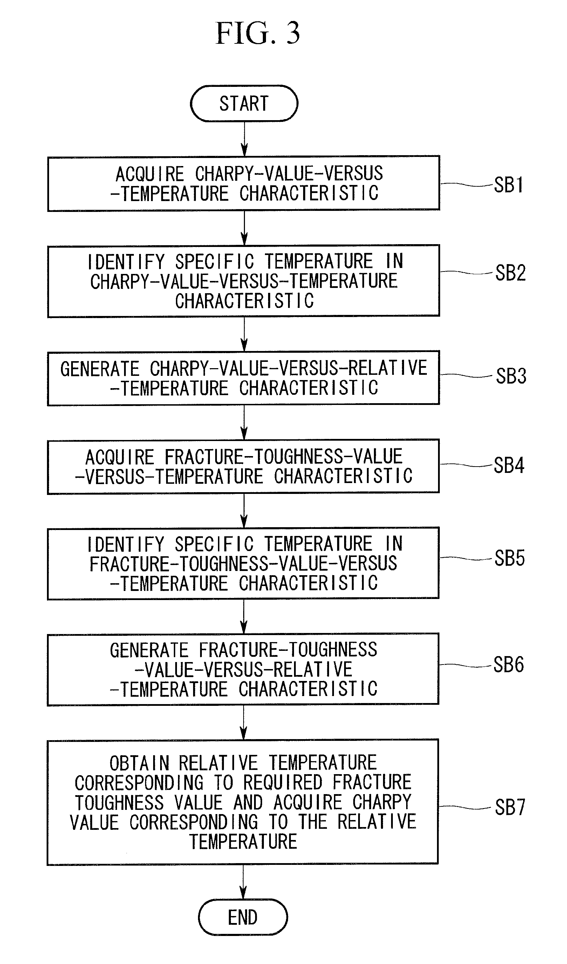

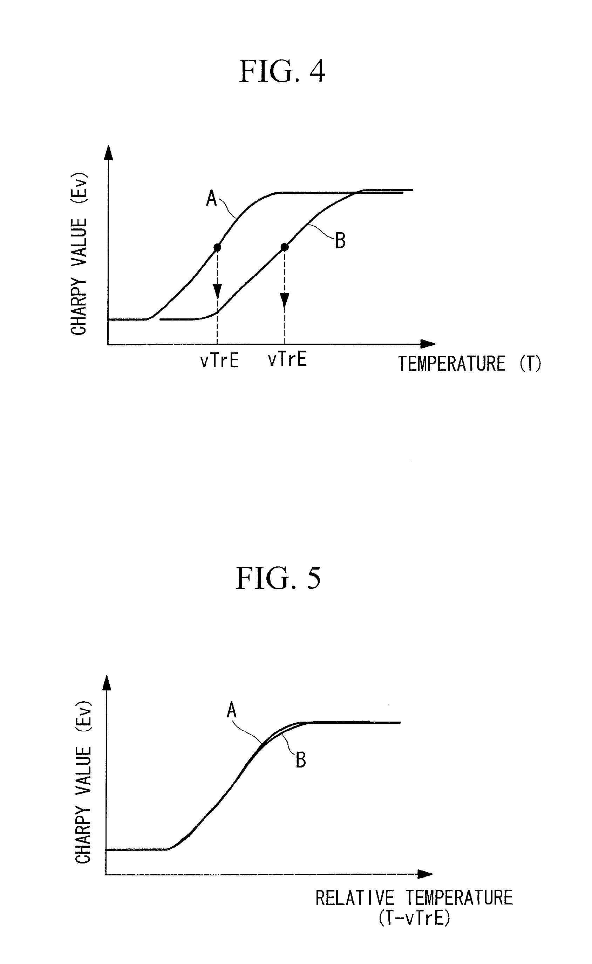

A procedure for converting the fracture toughness value to the Charpy value is described below, with reference to Fig. 3.
First, Charpy-value-versus-temperature characteristics are acquired for a plurality of evaluation members serving as evaluation targets (Step SB1 in Fig. 3). An example of Charpy-value-versus-temperature characteristics for evaluation members A and B is shown in Fig. 4. In Fig. 4, the x-axis is temperature T and the y-axis is Charpy value Ev. The Charpy value Ev is the energy absorbed by a member until the member reaches a point of fracture. In addition, although both the evaluation members A and B are of the same steel (for example, alloy) employed in the evaluation target portion, the manufacturer, lot, etc. differ.

Next, for the respective Charpy-value-versus-temperature characteristics of the evaluation members A and B, the temperature indicating the Charpy value of a predetermined fraction (for example, 50 %) relative to the maximum Charpy value is identified as a specific temperature vTrE (Step SB2).
Next, a Charpy-value-versus-relative-temperature characteristic is generated (Step SB3), where the x-axis of the Charpy-value-versus-temperature characteristic is defined as relative temperature (T - vTrE), which is temperature T minus the specific temperature vTrE.
Fig. 5 shows the Charpy-value-versus-relative-temperature characteristic. In Fig. 5, the x-axis is the relative temperature (T - vTrE) and the y-axis is the Charpy value Ev. As shown in Fig. 5, by putting the relative temperature (T - vTrE) on the x-axis, it becomes possible to represent the characteristics of the evaluation targets A and B, which are shown with variation in Fig. 4, as characteristics having the same trend. In addition, by obtaining an average characteristic of the evaluation members A and B, the Charpy-value-versus-relative-temperature characteristic of the alloy can be obtained as a single curve.

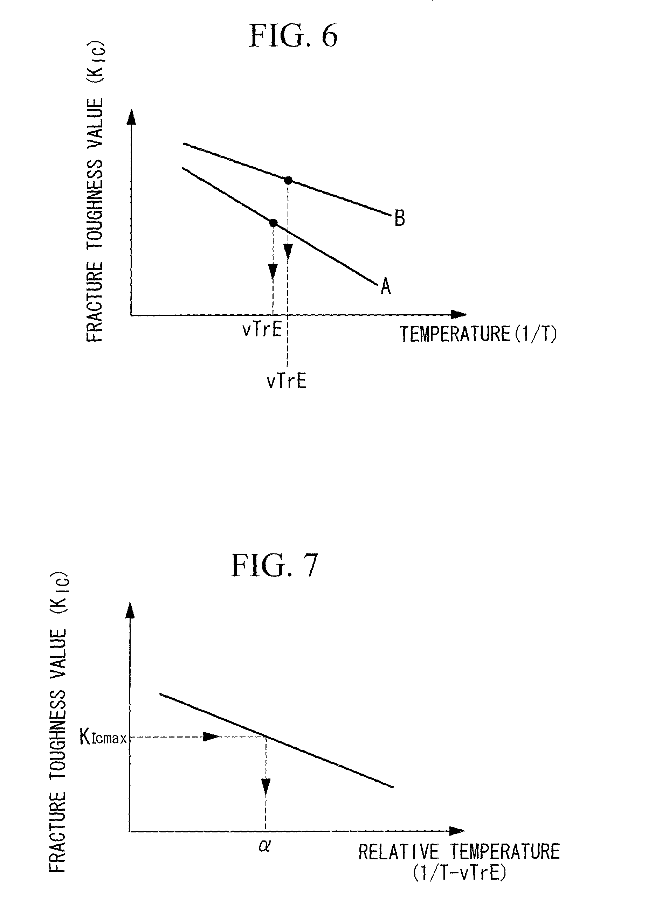

Next, fracture-toughness-value-versus-temperature characteristics of the same evaluation members A and B are acquired (Step SB4). An example of fracture-toughness-value-versus-temperature characteristics for the evaluation members A and B is shown in Fig. 6. In Fig. 6, the x-axis is reciprocal temperature (1/T), and the y-axis is fracture toughness value K_{IC}.
Next, for the respective fracture-toughness-value-versus-temperature characteristics of the evaluation members A and B, a temperature indicating the fracture toughness value of a predetermined fraction (for example, 50 %) relative to the maximum fracture toughness value is identified as a specific temperature vTrE (Step SB5).

Next, a fracture-toughness-value-versus-relative-temperature characteristic is generated (Step SB6), where the x-axis of the fracture-toughness-value-versus-temperature characteristic is defined as relative temperature (T - vTrE), which is temperature T minus the specific temperature vTrE. An example of the fracture-toughness-value-versus-relative-temperature characteristic is shown in Fig. 7. In Fig. 7, the x-axis is reciprocal relative temperature (1/(T - vTrE)) and the y-axis is fracture toughness value K_{IC}. As shown in Fig. 7, by putting the reciprocal of relative temperature (1/(T - vTrE)) on the x-axis, it becomes possible to represent characteristics of evaluation targets A and B, which are shown with variation in Fig. 6, as characteristics having the same trend. Here, Fig. 7 shows an average characteristic for which an average is taken between respective fracture-toughness-value-versus-relative-temperature characteristics of the evaluation members A and B.

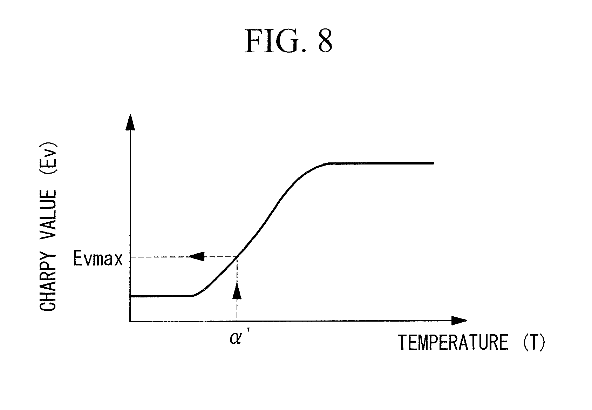

Next, for the average characteristic of the evaluation members A and B shown in Fig. 7, the reciprocal α of the relative temperature corresponding to the required fracture toughness value K_{ICmax} is identified; a relative temperature α' corresponding to this reciprocal α of the relative temperature is obtained; and, furthermore, a Charpy value Evmax corresponding to this relative temperature α' is acquired from the average characteristic of the Charpy-value-versus-relative-temperature characteristic shown in Fig. 8. Accordingly, it is possible to obtain a required Charpy value corresponding to the required fracture toughness value.

Then, when performing an evaluation inspection of an actual member, it becomes possible to easily perform a durability evaluation of a member serving as an inspection target by judging whether or not the Charpy value of the member serving as the inspection target satisfies the required Charpy value Evmax.

The above-described evaluation-index setting method may be realized by a computer that executes a program stored in a storage medium. In this case, for example, the series of processing steps associated with the evaluation-index setting mentioned above is stored in a computer-readable storage medium as an evaluation-index setting program, and a computer reads out and executes this program, thereby performing the processing mentioned above. Here, the computer-readable storage medium means a magnetic disk, a magneto-optical disk, a CD-ROM, a DVD-ROM, a semiconductor memory or the like. In addition, this computer program may be distributed to a computer through a communication line, and the computer receiving this distribution may execute this program.

As described above, with the evaluation-index setting method and the program therefor according to this embodiment, an operating condition of a wind turbine is taken into consideration; a minimum fracture toughness value necessary to endure through a compensation operating period under this operating condition is obtained; and a required fracture toughness value that serves as an index is determined based on this fracture toughness value; therefore, it becomes possible to set an appropriate evaluation index which reflects the operating situation of the wind turbine.

Although the embodiment of the present invention has been described above in detail with reference to the drawings, the specific configurations are not limited to this embodiment, and design alterations and the like within a range that does not depart from the sprit of the present invention are encompassed.

## Claims

1. An evaluation-index setting method comprising:
a first step of obtaining time-series data of a load that acts on an evaluation target portion of a wind turbine, when operating under a predetermined operating condition, and of obtaining stress time-series data from this load time-series data; and
a second step of obtaining a fracture toughness value, which is a value that is minimally necessary for the evaluation target portion to maintain predetermined strength for a case in which the evaluation target portion is subjected to stress based on the stress time-series data over a compensation operating period, and of determining, on the basis thereof, a required fracture toughness value that serves as an index.

2. An evaluation-index setting method according to Claim 1, wherein the second step comprises:
a step of setting the size of an initial defect occurring in the evaluation target portion;
a step of estimating the size of the initial defect after the compensation operating period has passed, for a case in which stress based on the stress time-series data acts on the evaluation target portion; and
a step of obtaining a minimum fracture toughness value, which is a value that does not cause fracture even in a case in which a maximum stress in the stress time-series data acts on the defect after the compensation period has passed, and of determining the required fracture toughness value on the basis thereof.

3. An evaluation-index setting method according to Claim 1 or 2, further comprising a third step of converting the required fracture toughness value to a required Charpy value.

4. An evaluation-index setting method, wherein the third step comprises:
a step of acquiring a Charpy-value-versus-temperature characteristic of a member to be employed in the evaluation target portion;
a step of identifying, as a specific temperature, a temperature indicating a Charpy value of a predetermined fraction relative to a maximum Charpy value in the Charpy-value-versus-temperature characteristic;
a step of generating a Charpy-value-versus-relative-temperature characteristic in which the temperature in the Charpy-value-versus-temperature characteristic is defined as relative temperature, which is the temperature minus the specific temperature;
a step of acquiring a fracture-toughness-value-versus-temperature characteristic of the member;
a step of identifying, as a specific temperature, a temperature indicating a fracture toughness value of the predetermined fraction relative to the maximum fracture toughness value in the fracture-toughness-value-versus-temperature characteristic;
a step of generating a fracture-toughness-value-versus-relative-temperature characteristic in which the temperature in the fracture-toughness-value-versus-temperature characteristic is defined as relative temperature, which is the temperature minus the specific temperature; and
a step of obtaining a relative temperature value corresponding to the required fracture toughness value from the fracture-toughness-value-versus-relative-temperature characteristic, and of acquiring a Charpy value corresponding to this relative temperature value from the Charpy-value-versus-relative-temperature characteristic.

5. An evaluation-index setting program for causing a computer to execute:
first processing of obtaining time-series data of a load that acts on an evaluation target portion of a wind turbine, when operating under a predetermined operating condition, and of obtaining stress time-series data from this load time-series data; and
second processing of obtaining a fracture toughness value, which is a value that is minimally necessary for the evaluation target portion to maintain predetermined strength for a case in which the evaluation target portion is subjected to stress based on the stress time-series data over a compensation operating period, and of determining, on the basis thereof, a required fracture toughness value that serves as an index.
